Europäisches Patentamt

**European Patent Office**

**Office européen des brevets**

(11) Numéro de publication: **0 063 982**

**B1**

## FASCICULE DE BREVET EUROPÉEN

(45) Date de publication du fascicule du brevet:
**04.11.87**

(51) Int. Cl.⁴: **H 01 M 12/06**

(21) Numéro de dépôt: **82400639.9**

(22) Date de dépôt: **07.04.82**

(54) Générateur électrochimique comprenant une électrode mince à gaz.

(30) Priorité: **13.04.81 FR 8107409**

(43) Date de publication de la demande:
**03.11.82 Bulletin 82/44**

(45) Mention de la délivrance du brevet:
**04.11.87 Bulletin 87/45**

(84) Etats contractants désignés:
**AT BE CH DE GB IT LI NL SE**

(56) Documents cité:
**FR-A-1 455 261**
**FR-A-1 457 130**
**FR-A-2 060 759**
**FR-A-2 193 264**
**FR-A-2 251 109**
**US-A-2 641 623**

(73) Titulaire: **SOCIETE LES PILES WONDER, 7-9, rue Paul Vaillant Couturier, F-92300 Levallois- Perret (FR)**

(72) Inventeur: **Vignaud, René, 17, Avenue Anatole France, F-93600 Aulnay- Sous- Bois (FR)**

(74) Mandataire: **Weinmiller, Jürgen, Lennéstrasse 9 Postfach 24, D-8133 Feldafing (DE)**

## Description

La présente invention concerne les générateurs électrochimiques, notamment les piles du type métal/air, selon le préambule de la revendication 1.

On connaît ainsi une pile métal/air faisant l'objet du brevet français n° 2 105 424 qui comporte une électrode positive tubulaire cylindrique en une membrane en polymère hydrofuge et perméable aux gaz par exemple en polytétrafluoréthylène, membrane revêtue sur sa surface interne d'une couche électrocatalytique, réalisée par exemple au moyen de particules d'argent dans un liant de particules de polytétrafluoréthylène; un écran métallique, avantageusement constitué par une gaze de nickel, qui est noyé dans la couche du catalyseur par exemple, constitue le premier collecteur de courant. Quant à la masse anodique, constituant l'électrode négative, elle est logée à l'intérieur du tube cylindrique et elle est faite de poudre de zinc (qui deviendra de l'oxyde de zinc par oxydation au cours du fonctionnement) et d'un électrolyte convenable, tel que la potasse sous forme de gel ou pâte; un second collecteur de courant plonge dans cette masse anodique. Un séparateur, par exemple en papier traité, est en contact intime avec la surface électrocatalytique de l'électrode positive. Deux disques isolants, en caoutchouc ou en matière plastique, sont disposés aux deux extrémités du tube cylindrique et sont destinés à enfermer la masse anodique et à empêcher toute fuite de l'électrolyte, par serrage mécanique des disques contre les extrémités du tube cylindrique. Enfin deux plaques métalliques connectées, respectivement au premier et au second collecteur de courant, sont disposées chacune sur l'un des disques isolants pour constituer les pôles positifs et négatifs de la pile.

On notera que dans une telle pile et les piles métal/air analogues de la technique antérieure:
- l'électrode positive ou cathode et son collecteur de courant sont constituées par des éléments distincts, le collecteur ayant été fabriqué séparément;
- l'étanchéité, qui doit exister aux deux extrémités de l'électrode positive constituée par un tube cylindrique ouvert à ses deux extrémités, est difficile à réaliser au moyen de deux disques isolants fermant ledit tube à ses deux extrémités.

L'expérience a prouvé en effet qu'entre deux pièces (une extrémité du tube et un disque isolant), l'étanchéité est plus souvent insuffisante, car il reste un canal de petite dimension dont les parois sont mouillées par l'électrolyte, tel que la potasse, d'où risque de fuite d'électrolyte hors de la pile avec toutes les conséquences néfastes que cela entraîne (la pile devient inutilisable et les pièces métalliques environnantes sont attaquées par l'électrolyte).

Etant donné que l'importance des fuites possibles dans un générateur métal/air croît avec la longueur de la jonction d'étanchéité avec la cathode enfermant la masse anodique, il y a intérêt à diminuer cette longueur.

L'invention a éventuellement pour but de réduire cette longueur.

A cet effet, la demanderesse a imaginé de donner à l'électrode positive ou cathode d'un tel générateur la forme d'un réceptacle le plus fermé possible avec une seule ouverture (au lieu de deux), ouverture permettant l'introduction à l'intérieur de l'électrode positive de la masse anodique et du second collecteur de courant associé à cette masse.

Il est connu d'après le brevet américain n° 2 641 623 un générateur électrochimique du type métal/air comportant une électrode positive cupulaire retenant à l'intérieur un électrolyte et une anode. L'électrode positive selon ce brevet comporte une surface intérieure qui se termine par une extrémité fermée en cul de sac légèrement arrondie aux extrémités, tandis que la surface extérieure est recouverte d'une pellicule métallique réalisée par exemple par galvanoplastie.

Le brevet français n° 2 251 109 décrit une électrode positive pour pile métallique comportant un collecteur de courant formé par un godet métallique à fond fermé et pourtour légèrement recourbé près de ce fond.

Contrairement à la pratique antérieure, l'invention a pour objet un générateur électrochimique, notamment une pile du type métal/air, selon la revendication 1.

En ce qui concerne les caractéristiques d'une mise en oeuvre préférée de l'invention, référence est faite aux sous-revendications.

L'invention pourra, de toute façon, être bien comprise à l'aide du complement de description qui suit, ainsi que des dessins ci-annexés, lesquels complément et dessins sont, bien entendu, donnés surtout à titre d'indication.

La figure 1 est une vue en coupe d'un mode de réalisation, donné à titre d'exemple non limitatif, d'un générateur doté des perfectionnements selon l'invention.

La figure 2 représente l'évolution de la tension en volts portée en ordonnées, en fonction du temps en heures, porté en abscisses, au cours d'une décharge d'un générateur de module R20 dans le régime informatif (sur une résistance de 3,9 ohms en continu).

Selon l'invention et plus spécialement selon celui de ses modes d'application, ainsi que selon ceux des modes de réalisation de ses diverses parties, auxquels il semble qu'il y ait lieu d'accorder la préférence, se proposant, par exemple, de réaliser un générateur électrochimique comprenant une électrode mince à gaz, on s'y prend comme suit ou d'une manière analogue.

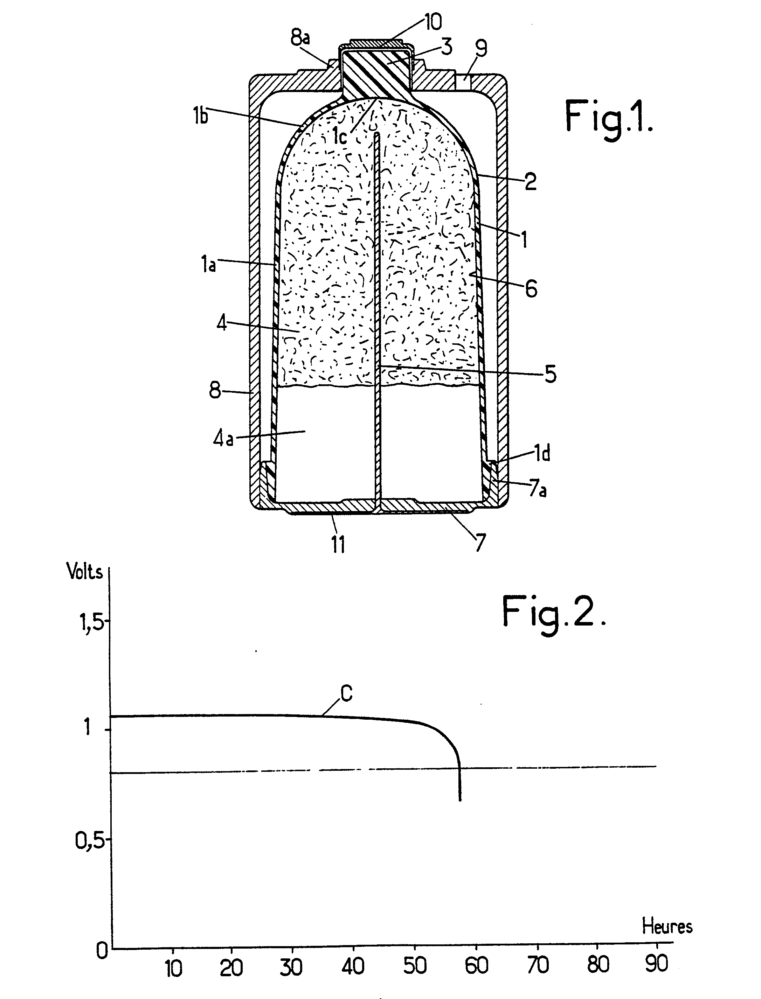

Référence étant tout d'abord faite à la figure 1, on voit que le générateur métal/air comprend une électrode positive ou cathode 1, un premier collecteur de courant 2 associé à cette électrode 1 qui comporte une protubérance 3, une masse anodique 4 (sous laquelle se trouve une chambre d'expansion 4a permettant le gonflement de la masse anodique 4 au cours du fonctionnement du générateur), un second collecteur de courant 5 associé à cette masse, un séparateur 6, un couvercle 7, un boîtier 8 percé d'au moins un trou 9 et deux pôles ou contacts 10 et 11.

Plus précisément et conformément à la caractéristique principale de l'invention, l'électrode positive 1 a, comme illustré, la forme d'un réceptacle ou cloche constitué de préférence par une première partie tubulaire 1a, cylindrique ou de préférence légèrement tronconique, la partie de plus grand diamètre se trouvant à la partie inférieure de la figure 1, et par une seconde partie 1b en forme de calotte hémisphérique dans le prolongement de la portion de plus petit diamètre du tube si celui-ci est tronconique. Les deux parties 1a et 1b constituent en fait une pièce unique intégrale 1, qui est l'électrode positive ou cathode du générateur. Cette pièce 1 comporte un bouton ou téton 3 disposé à la partie supérieure de la calotte 1b.

De préférence, l'électrode 1 est réalisée par le procédé décrit dans la demande de brevet précitée, c'est-à-dire par un procédé consistant à préparer un mélange homogène de particules sèches de composés actifs (constitués par au moins un composé à activité électrocatalytique et éventuellement par au moins un composé présentant une conductivité électronique) et de particules constituées par des fibres sèches de polytétrafluoréthylène et ayant une taille moyenne de l'ordre de 0,5 mm, obtenues par coagulation d'une émulsion de polytétrafluoréthylène, à ajouter un lubrifiant et éventuellement un agent tensio-actif afin de réaliser l'enrobage des particules du mélange par le lubrifiant et à mettre en forme les particules lubrifiées du mélange.

A titre d'exemple, le mélange peut être constitué par 45 parties en poids de polytétrafluoréthylène (PTFE) ICI de type CD et de 55 parties en poids de carbone catalysé au bioxyde de manganèse, mis en forme, ayant une épaisseur de paroi de l'ordre de 0,5 mm.

On peut également utiliser l'une des deux compositions suivantes (les parties étant indiquées en poids):
composition a:
60 parties de PTFE "Soréflon" 6-20
6 parties de graphite
4 parties de noir de carbone conducteur électronique
30 parties de carbone catalysé à l'argent
composition b:
60 parties de PTFE Hoechst Série 2000
8 parties de carbone conducteur
32 parties de carbone actif catalysé par une spinelle au manganèse.

La légère conicité de l'électrode positive 1, en fait de sa partie tronconique 1a, présente l'avantage de faciliter sa réalisation par la mise en oeuvre du procédé précité, assure un meilleur contact du séparateur 6 et de la masse anodique 4 par emboîtement de surfaces tronconiques et améliore l'aération de la paroi externe de l'électrode 1 à partir des trous 9 ménagés dans le boîtier 6 de la pile.

La conductibilité électronique de l'électrode positive 1 est améliorée par la présence d'un collecteur de courant 2 comportant un conducteur électronique métallique, de préférence en nickel ou bien en fer, argent, cuivre, or, ces métaux étant utilisés seuls ou en alliage, ou en alliage Monel.

Le collecteur 2 peut être constitué par une grille ou un déployé métalliques ou bien une tôle perforée incorporée, au cours du moulage, dans la pâte de l'électrode 1. Toutefois le collecteur 2 est réalisé de préférence par une pellicule métallique poreuse d'épaisseur comprise entre 0,01 et 1 mm, de préférence de l'ordre de 0,05 mm, recouvrant uniformément la surface de l'électrode 1.

Ce collecteur 2 est réalisé de préférence par le procédé décrit dans la demande de brevet précitée et qui consiste à déposer, sur la surface externe de l'électrode 1, une pellicule métallique mince poreuse, adhérente sur l'électrode, de préférence par galvanoplastie et pouvant également être effectuée par dépôt chimique, par pulvérisation cathodique ou par shoopage.

Une telle pellicule a l'avantage de présenter une porosité ayant un diamètre de pores inférieur à 0,5 mm, avec une perméabilité supérieure à 100 cm/h. Cette pellicule, bien que superficielle, est incrustée dans la microporosité de la surface de l'électrode 1 dont elle est inséparable, sans destruction soit de la pellicule 2, soit de l'électrode 1.

On peut prévoir, comme indiqué dans ladite demande de brevet, un collecteur de courant 2 ne présentant pas une surface uniforme, mais des surépaisseurs, par exemple sous forme de nervures.

La masse anodique 4 est constituée par un mélange d'éléments métalliques, par exemple par une poudre métallique de fer, cadmium, magnésium et/ou aluminium; de préférence la masse anodique est en poudre de zinc. La poudre de zinc ou d'un autre métal est imprégnée d'un électrolyte soit salin (chlorure d'ammonium et/ou chlorure de sodium), soit alcalin (par exemple potasse gélifiée par de la carboxyméthylcellulose).

Le séparateur 6 disposé entre l'électrode positive ou cathode 1 et la masse anodique 4 est réalisé par exemple en un matériau non tissé de polyamide, de fibranne, PVC seuls ou en mélanges.

Le boîtier 8 est réalisé en métal, par exemple en acier, tandis que le couvercle 7 est réalisé en une matière plastique telle que le polystyrène. Pour assurer une meilleure étanchéité, on peut prévoir une collerette 1d autour de l'extrémité libre de la partie tronconique 1a de l'électrode 1. A sa partie supérieure le boîtier 8 comporte un évidement cylindrique pour le passage du téton 3.

Enfin les prises extérieures de courant sont assurées par les pièces métalliques 10 et 11 en contact électrique respectivement avec le collecteur 2 (en liaison électrique avec la cathode 1) et avec le collecteur de courant 5 (plongé dans la masse anodique 4).

Le générateur qui vient d'être décrit présente d'abord l'avantage d'une très bonne étanchéité et d'une grande légèreté du fait de la structure de l'ensemble cathode 1 - collecteur 2.

Par ailleurs, on sait que les piles dites "alcalines" ont des capacités plus élevées, particulièrement en régime de décharge sur faible résistance (régime dit "informatif") que les piles dites "salines". Un générateur selon l'invention du type "alcalin" présente une capacité encore accrue par rapport aux piles "alcalines" au bioxyde de manganèse, de même module, de la technique antérieure.

Sur la figure 2 on a illustré la courbe C de décharge d'un élément selon l'invention, de module R20, dans le régime dit "informatif" le plus dur, sur une résistance de 3,9 ohms en continu; on a constaté que la durée de décharge atteint environ 60 heures (portion verticale de la courbe C), alors qu'elle n'est que d'environ 30 heures avec une pile alcaline au bioxyde de manganèse de type classique. La courbe C montre également la stabilité du niveau de la tension (légèrement supérieure à 1 volt) au cours de la décharge de la pile.

Un avantage analogue se retrouve dans le cas d'une décharge dans un régime dit "lent".

En outre un générateur selon l'invention permet une fabrication très simple et très rapide, notamment lorsque l'ensemble électrode positive 1 - collecteur 2 est réalisé comme décrit dans ladite demande de brevet (mode de réalisation préféré de la présente invention).

Notons enfin qu'un procédé de fabrication d'une électrode positive pour un générateur tel que décrit ci-dessus fait l'objet d'une demande parallèle de brevet européen EP-A-0 063 981 (EP 82 400 638.1) de dates de priorité et de dépôt identiques à celles du présent dossier.

## Revendications

1. Générateur électrochimique, notamment pile du type métal/air, comportant un boîtier, et, disposés à l'intérieur de ce boîtier: une électrode positive à air (1) formant cathode et ayant une forme creuse laissant un espace interne disponible; un premier collecteur de courant (2) associé à cette électrode positive; une masse anodique (4) disposée dans au moins une partie dudit espace interne disponible; et un second collecteur de courant (5) associé à cette masse anodique; caractérisé en ce que ladite électrode positive est mince et a la forme d'un doigt de gant ou cloche sensiblement de révolution autour d'un axe et dont le diamètre, tant extérieur qu'intérieur, diminue depuis l'extrémité ouverte jusqu'à l'extrémité fermée dont la partie interne présente une forme courbe d'ensemble, en laissant ainsi un espace externe libre entre ladite électrode positive (1) et le boîtier (8), et en ce que ledit boîtier rigide (8) est percé d'au moins un orifice (9) permettant l'accès de l'air ambiant à l'intérieur du boîtier, dans ledit espace externe libre, contre la surface extérieure de l'électrode positive (1), éventuellement revêtue du premier collecteur de courant (2).

2. Générateur selon la revendication 1, caractérisé en ce que ladite électrode positive est constituée par un tube de révolution (1a), ayant une forme légèrement tronconique, fermé à l'une de ses extrémités, à savoir celle de plus petit diamètre, par une calotte hémisphérique (1b) qui forme une seule pièce avec le tube.

3. Générateur selon la revendication 2, caractérisé en ce que le sommet (1c) de ladite calotte est surmonté d'un téton cylindrique plein (3).

4. Générateur selon l'une quelconque des revendications précédentes, caractérisé en ce qu'il comprend en outre un séparateur (6) entre la masse anodique et l'électrode positive.

5. Générateur selon l'une quelconque des revendications précédentes, caractérisé en ce que l'électrode positive (1a) est fabriquée en préparant un mélange homogène de particules sèches de composés actifs, constitués par au moins un composé à activité électrocatalytique et éventuellement par au moins un composé présentant une conductivité électronique, et de particules obtenues à partir de fibres sèches de polytétrafluoréthylène et ayant une taille moyenne de l'ordre de 0,5 mm, obtenues par coagulation d'une émulsion de polytétrafluoréthylène, en ajoutant un lubrifiant et éventuellement un agent tensio-actif, afin de réaliser l'enrobage des particules du mélange par le lubrifiant, et en mettant en forme les particules lubrifiées du mélange.

6. Générateur selon l'une quelconque des revendications précédentes, caractérisé en ce que le premier collecteur de courant (2) est réalisé en déposant, notamment par galvanoplastie, sur au moins une partie de la surface de l'électrode positive, une pellicule métallique mince poreuse adhérente sur l'électrode obtenue.

7. Générateur selon l'ensemble des revendications 5 et 6, caractérisé en ce que l'électrode positive (1) et le premier collecteur de courant (2) qui lui est associé sont réalisés sous la forme d'un ensemble unitaire.

8. Générateur selon l'une des revendications 1 à 7, caractérisé en ce que le second collecteur (5) de courant est disposé suivant l'axe de révolution de ladite électrode positive (1) à l'intérieur de la masse anodique (4).

9. Générateur selon l'une quelconque des revendications 1 à 8, caractérisé en ce que l'extrémité ouverte de ladite électrode positive (1) est fermée, une fois ledit espace interne muni de la masse anodique (4) et du second collecteur de courant (5) associé à cette masse, par un couvercle (7) dont le rebord périphérique (7a) entoure d'une manière étanche ladite extrémité ouverte.

10. Générateur selon l'une quelconque des revendications précédentes, caractérisé en ce qu'une chambre d'expansion (4a) se trouve sous la masse anodique (4) permettant son gonflement au cours du fonctionnement du générateur.

## Patentansprüche

1. Elektrochemischer Generator, insbesondere Batterie vom Metall/Luft-Typ, mit einem Gehäuse und darin angeordnet mit einer positiven Luftelektrode (1), die die Kathode bildet und eine Hohlform aufweist, die einen freien Innenraum läßt, mit einem ersten Stromkollektor (23), der zu dieser positiven Elektrode gehört, mit einer anodischen Masse (4), die in mindestens einem Teil des freien Innenraums angeordnet ist, und mit einem zweiten Stromkollektor (5), der zu dieser anodischen Masse gehört, dadurch gekennzeichnet, daß die positive Elektrode dünn ist und die Form eines Handschuhfingers oder einer Glocke aufweist, die im wesentlichen drehsymmetrisch zu einer Achse ist und deren innerer und deren äußerer Durchmesser vom offenen Ende zum geschlossenen Ende hin abnehmen, wo der innere Bereich eine gekrümmte Gesamtform aufweist und so einen äußeren Freiraum zwischen der positiven Elektrode (1) und dem Gehäuse (8) läßt, und daß das starre Gehäuse (8) mindestens eine Öffnung (9) aufweist, die den Zugang von Umgebungsluft ins Innere des Gehäuses ermöglicht, und zwar in den äußeren Freiraum und gegen die äußere Oberfläche der positiven Elektrode (1), die gegebenenfalls mit dem ersten Stromkollektor (2) bedeckt ist.

2. Generator nach Anspruch 1, dadurch gekennzeichnet, daß die positive Elektrode aus einem drehsymmetrischen Rohr (1a) besteht, das eine leicht konische Form aufweist, an einem seiner Enden, d.h. an dem mit dem kleinsten Durchmesser, durch eine halbkugelförmige Kalotte (1b) geschlossen ist, die mit dem Rohr ein Bauteil bildet.

3. Generator nach Anspruch 2, dadurch gekennzeichnet, daß der Scheitel (1c) der Kalotte einen nichthohlen zylindrischen Zapfen (3) trägt.

4. Generator nach einem beliebigen der vorhergehenden Ansprüche, dadurch gekennzeichnet, daß er außerdem einen Separator (6) zwischen der anodischen Masse und der positiven Elektrode aufweist.

5. Generator nach einem beliebigen der vorhergehenden Ansprüche, dadurch gekennzeichnet, daß die positive Elektrode (1a) hergestellt wird, indem man eine homogene Mischung von trockenen Partikeln aktiver Stoffe herstellt, die aus mindestens einem Stoff mit elektrokatalytischer Aktivität und eventuell aus mindestens einem Stoff mit einer elektronischen Leitfähigkeit und aus Partikeln besteht, die ausgehend von trockenen Polytetrafluoräthylenfasern hergestellt sind und eine mittlere Größe von etwa 0,5 mm haben, erhalten durch Koagulation einer Emulsion von Polytetrafluoräthylen, indem ein Schmiermittel und eventuell ein tensioaktiven Agens hinzugefügt werden, um die Umhüllung der Partikel der Mischung mit dem Schmiermittel zu erreichen, und indem die geschmierten Partikel der Mischung in Form gebracht werden.

6. Generator nach einem beliebigen der vorhergehenden Ansprüche, dadurch gekennzeichnet, daß der erste Stromkollektor (2) dadurch hergestellt wird, daß insbesondere durch Galvanoplastik auf mindestens einem Teil der Oberfläche der positiven Elektrode ein dünner poröser Metallfilm aufgebracht wird, der auf der erhaltenen Elektrode haftet.

7. Generator nach der Gesamtheit der Ansprüche 5 und 6, dadurch gekennzeichnet, daß die positive Elektrode (1) und der zu ihr gehörende erste Stromkollektor (2) in einem Stück hergestellt werden.

8. Generator nach einem der Ansprüche 1 bis 7, dadurch gekennzeichnet, daß der zweite Stromkollektor (5) entlang der Symmetrieachse der positiven Elektrode (1) im Inneren der anodischen Masse (4) angeordnet ist.

9. Generator nach einem beliebigen der Ansprüche 1 bis 8, dadurch gekennzeichnet, daß das offene Ende der positiven Elektrode (1), sobald der innere Freiraunm mit der anodischen Masse (4) und dem zu dieser Masse gehörenden zweiten Stromkollektor (5) gefüllt ist, durch einen Deckel (7) geschlossen wird, dessen peripherer Rand (7a) dicht das genannte offene Ende umgibt.

10. Generator nach einem beliebigen der vorhergehenden Ansprüche, dadurch gekennzeichnet, daß eine Ausdehnungskammer (4a) sich unter der anodischen Masse (4) befindet und ihre Ausdehnung während des Betriebs des Generators ermöglicht.

## Claims

1. An electrochemical generator, especially of the metal/air type, comprising a housing and, disposed inside this housing: a positive air electrode (1) constituting a cathode and having a hollow form leaving an inner free space, a first current collector (2) associated to this positive electrode, an anodic mass (4) disposed in at least part of said inner free space, and a second current collector (5) associated to this anodic mass, characterized in that said positive electrode is thin and has the shape of a glove finger or a bell essentially symmetric about an axis, the outer and inner diameter of this electrode decreasing from the open end to the closed end whose inner part presents a curved general form, thus leaving an outer free space between said positive electrode (1) and the housing (8), and in that said rigid housing (8) has at least one opening (9) permitting the acces of ambient air into the housing, that means into said outer free space and against the outer surface of the positive electrode (1), possibly covered by the first current collector (2).

2. A generator according to claim 1, characterized in that said positive electrode is constituted by a tube (1a) having a rotational symmetry and a slightly truncated form, closed at one of its ends, i.e. that of the smaller diameter, by a hemisperical cap (1b) which is integral with the tube.

3. A generator according to claim 2, characterized in that the peak (1c) of said cap is surmounted by a full nipple (3).

4. A generator according to any one of the preceding claims, characterized in that it further comprises a separator (6) between the anodic mass and the positive electrode.

5. A generator according to any one of the preceding claims, characterized in that the positive electrode (1a) is made by preparing a homogenous mixture of dry particles of active compounds, constituted by at least one compound with electrocatalytical activity and possibly by at least a compound presenting an electronic conductivity, and of particles obtained from dry fibres of polytetrafluorethylene and having a mean size of about 0,5 mm, obtained by coagulation of an emulsion of polytetrafluorethylene, adding a lubricant and possibly a tensio-active agent so as to realise the coating of the particles of the mixture with the lubricant, and shaping the lubricated particles of the mixture.

6. A generator according to any one of the preceding claims, characterized in that the first current collector (2) is realised by depositing, in particular by electroplating, on at least part of the surface of the positive electrode, a thin porous metal film adhering on the obtained electrode.

7. A generator according to claims 5 and 6, characterized in that the positive electrode (1) and the first current collector (2) which is associated to it are realised in the form of a unitary assembly.

8. A generator according to one of claims 1 to 7, characterized in that the second current collector (5) is disposed along the symmetry axis of said positive electrode (1) inside the anodic mass (4).

9. A generator according to any one of the preceding claims, characterized in that the open end of said positive electrode (1) is closed, once said inner space is supplied with the anodic mass (4) and the second current collector (5) associated to this mass, by a cover (7), the peripheral edge (7a) of which tightly surrounds said open end.

10. A generator according to any one of the preceding claims, characterized in that an expansion chamber (4a) is located below the anodic mass (4), so that the latter can expand during the operation of the generator.

Fig.1.

Fig.2.